# EUROPEAN PATENT SPECIFICATION

(11) **EP 3 437 833 B1**
(45) Date of publication and mention of the grant of the patent: **25.11.2020**
(21) Application number: 17773756.6
(22) Date of filing: 14.02.2017
(51) Int. Cl.: B29C 61/06, B32B 27/28, B65D 65/40, C08L 33/02

(54) **HEAT-SHRINKABLE FILM AND METHOD FOR PRODUCING HEAT-SHRINKABLE FILM**
WÄRMESCHRUMPFBARE FOLIE UND VERFAHREN ZUR HERSTELLUNG EINER WÄRMESCHRUMPFBAREN FOLIE
FILM THERMORÉTRACTABLE ET PROCÉDÉ POUR PRODUIRE UN FILM THERMORÉTRACTABLE

(30) Priority: 31.03.2016 JP 2016072741
(43) Date of publication of application: 06.02.2019
(73) Proprietor: Kureha Corporation, Chuo-ku Tokyo 103-8552 (JP)
(72) Inventor: NAMBU, Shota, Tokyo 103-8552 (JP); KITADA, Ichiro, Tokyo 103-8552 (JP); ITOH, Tadayoshi, Tokyo 103-8552 (JP)
(74) Representative: BRP Renaud & Partner mbB Rechtsanwälte Patentanwälte Steuerberater
(86) International application number: PCT/JP2017/005303
(87) International publication number: WO 2017/169208

(56) References cited:
- EP-A2- 2 077 239
- WO-A1-2013/121874
- WO-A1-2014/178379
- WO-A2-2009/032526
- JP-A- H1 035 720
- JP-A- H04 345 828
- JP-A- 2000 043 180
- JP-A- 2012 012 033
- JP-A- 2012 012 033
- JP-B2- 3 541 999

## Description

### TECHNICAL FIELD

The present invention relates to a heat-shrinkable film used for food packaging and a method for manufacturing a heat-shrink film.

### BACKGROUND ART

Packaging materials such as bags and pouches including a heat-shrinkable film have been used for food packaging in the related art. For example, a packaging material including a heat-shrinkable film is used to obtain a food package by filling contents into the packaging material, vacuum packaging it, and then heat-shrinking the vacuum-packaged product by passing it through a hot water shower or immersing it in hot water.

It is known herein that when meat such as raw meat and processed meat is vacuum-packed, meat juice (drip) is generated from the meat. In addition, when meat is packaged with a film, when an extra portion (hereinafter described as "edge part") of a packaging material after shrinkage looks bad, it is not favored by consumers. Therefore, to make drips to be generated from meat after packaging inconspicuous, opposing inner surface layers are sealed together by heating the inner surface layers to be in contact with a filling material such as meat, in an edge part of a packaging material, during heat-shrinking (hereinafter described as "self-welding"). In a case where self-welding ability is poor, i.e., the edge part is not sealed or almost not sealed after heat-shrinking, drips build up in the edge part during storage after packaging, causing a problem of bad appearance.

It is known that generally to enhance self-welding ability in the inner surface layer, an ionomer resin is included in the inner surface layer. As a laminate for packaging or a heat-shrinkable resin film including an ionomer resin in the surface layer, for example, Patent Document 1 describes a laminate for packaging, the laminate including at least three layers: an inner surface layer to be in contact with contents, an intermediate layer adjacent to the inner surface layer, and an outer surface layer; wherein the inner surface layer includes an inorganic lubricant and an organic lubricant; the intermediate layer includes an organic lubricant; and the inner surface layer is selected from a single-site catalyst polyethylene, LLDPE, and the like. Patent Document 2 describes a thermoplastic multi-layer film, including a gas barrier resin layer and an intermediate resin layer between an outer resin layer and an inner seal layer; wherein the inner seal resin layer is an ionomer resin layer; the intermediate resin layer is layered directly adjacent to the inner seal layer; and the thickness of the intermediate resin layer is greater than that of the ionomer resin layer. Patent Document 3 describes a film laminate for packaging, the film laminate including two polymer layers, wherein the thickness of a first polymer layer is not less than 0.3 times the total thickness of the film. Document 4 discloses another thermoplastic multilayer film including an ionomer resin layer laminated adjacent to a polyolefin resin layer. Further, Document D5 discloses a heat shrinkable multilayer film comprising a seal layer, the seal layer comprising an ethylene unsaturated carboxylic acid ester copolymer.

### CITATION LIST

### Patent Literature

Patent Document 1: WO 00/47406 (Published on August 17, 2000)
Patent Document 2: JP 11-207886 A (Published on August 3, 1999)
Patent Document 3: JP 2006-264334 A (Published on October 5, 2006)
Patent Document 4: JP 3541999 B2 (Published on July 14, 2004)
Patent Document 5: JP2012012033A (Published on January 19, 2012

### SUMMARY OF INVENTION

### Technical Problem

As a result of studies conducted by the inventor of the present application, however, it was found that a film wherein only an ionomer resin is used as an inner surface layer as disclosed in Patent Documents 1 and 2 can maintain self-welding ability, but when the opposing inner surface layers are heat sealed together in the edge part of the film, the strength of the heat sealed part at low temperature (hereinafter described as "seal strength") is insufficient.

In addition, Patent Document 3 describes a first polymer layer including an ethylene-unsaturated carboxylic acid copolymer, such as an ethylene/acrylic acid copolymer or an ethylene/methacrylic acid copolymer, and an ionomer resin, but Patent Document 3 does not describe ratios of them included in the first polymer layer, and does not mention self-welding ability and seal strength at low temperature.

The present invention has been made in view of the above problems, and an object of the present invention is to provide a heat-shrinkable film excellent in self-welding ability with high seal strength at low temperature.

### Solution to Problem

As a result of diligent studies by the present inventor to resolve the above problems, the present inventor found that allowing an inner surface layer to include an ethylene-unsaturated carboxylic acid copolymer and an ionomer resin in a specific ratio resulted in excellent self-welding ability and enhanced seal strength at low temperature, and arrived at the present invention below.

A heat-shrinkable film according to claim 1.

In addition, a method for manufacturing the heat-shrinkable film according to claim 5.

### Advantageous Effects of Invention

A heat-shrinkable film according to the present invention achieves effects of being excellent in self-welding ability and having high seal strength at low temperature. Description of Embodiments

Hereinafter, an embodiment of a heat-shrinkable film according to the present invention will be described in detail.

### Heat-shrinkable film

A heat-shrinkable film according to the present embodiment is a heat-shrinkable film according to claim 1. This results in excellent self-welding ability, and enhances area shrinkage ratio when immersed in hot water and enhances seal strength at low temperature. As a result, in a packaging material including the heat-shrinkable film, drips can be prevented from building up in the edge part of the packaging material during vacuum packaging, thereby allowing the resulting package to look better and to be less susceptible to damage during transportation and the like.

In the present embodiment, "excellent in self-welding ability" means that adhesion strength between the inner surface layers each other in the edge part of the packaging material is not less than 0.5 N/15 mm when the packaging material is allowed to stand in a room at not lower than 22°C and not higher than 24°C, and relative humidity of not lower than 45% and not higher than 55% for one day. The adhesion strength can be measured using a well-known tensile tester.

When the melting point of the inner surface layer of the heat-shrinkable film is at or near the heating temperature during heat-shrinking, i.e., in a range of not lower than 75°C and not higher than 95°C, it is excellent in self-welding ability. The heating temperature during heat-shrinking is preferably not lower than 70°C and not higher than 90°C, and more preferably not lower than 75°C and not higher than 85°C.

In addition, the heat-shrinkable film according to the present embodiment has an area shrinkage ratio of preferably not less than 55% and not greater than 90%, and more preferably not less than 60% and not greater than 90%, when immersed in hot water of 75°C for 10 seconds. Note that the area shrinkage ratio herein refers to [1 - (length of the heat-shrinkable film after shrinkage in a machine direction (MD) x length after shrinkage in a traverse direction (TD))/(length before shrinkage in MD x length before shrinkage in TD)] x 100.

With the area shrinkage ratio being not less than 55% when immersed in hot water of 75°C for 10 seconds, the edge part of the packaging material after shrinkage can be reduced, and by bringing the inner surface layer of the heat-shrinkable film and the filling material into intimate contact, an outflow of drips in a meat package can be reduced. In addition, with the area shrinkage ratio being not greater than 90%, the heat-shrinkable film does not excessively shrink and does not promote the outflow of drips by a compressing action which compresses the filling material. Thus, the heat-shrinkable film and the filling material can be brought into intimate contact without compressing the filling material as much as possible, thereby reducing the outflow of drips.

Furthermore, in the present embodiment, "seal strength at low temperature is high" means that the strength of the part where the opposing inner surface layers are heat sealed together in the edge part of the packaging material is high at not lower than 0°C and not higher than 10°C. The seal strength at low temperature can be checked, for example, by the following: to the part where one side of the edge parts of the packaging material is heat sealed (hereinafter described as "seal part"), a ball of 5.5 kg is dropped from 70 cm above the seal part located in a non-heat-sealed open side of the edge parts of the packaging material, up to five times for one sample; and this procedure is performed for 10 sheets of samples to count the number of samples with a ruptured seal part. In this case, it is meant that the smaller the number of samples with a ruptured seal part, the higher the seal strength is.

The heat-shrinkable film according to the present embodiment may include the inner surface layer to be in contact with a filling material, but it is preferably a multi-layer film including at least three layers: the inner surface layer, a barrier layer, and an intermediate layer between the inner surface layer and the barrier layer; and the heat-shrinkable film may include, as necessary, an outer layer in contact with an outer side of the barrier layer, an outermost layer present in the outermost side of the heat-shrinkable film, and an adhesive layer adhering each layer together. Including at least three layers including the inner surface layer, the barrier layer, and the intermediate layer provides an effect of being suitable as a packaging material.

In addition, the thickness of the heat-shrinkable film varies depending on types of the film, but it is typically not less than 5 µm and not greater than 300 µm, and preferably not less than 20 µm and not greater than 150 µm. Furthermore, in a case where the film is formed in multi-layers, each layer is typically not less than 0.1 µm and not greater than 200 µm, and preferably not less than 0.5 µm and not greater than 100 µm. Hereinafter, each layer composing the heat-shrinkable film according to the present embodiment will be described in detail.

### Inner surface layer

The inner surface layer included in the heat-shrinkable film according to the present embodiment is a layer to be in contact with a filling material.

The inner surface layer includes an ethylene-unsaturated carboxylic acid copolymer and an ionomer resin. A mixture of the ethylene-unsaturated carboxylic acid copolymer and the ionomer resin is also referred to as simply "blend material" in the present specification.

As for contents of the ethylene-unsaturated carboxylic acid copolymer and the ionomer resin in the inner surface layer, with the total of the content of the ethylene-unsaturated carboxylic acid copolymer and the content of the ionomer resin being 100 wt.%, the content of the ethylene-unsaturated carboxylic acid copolymer is not less than 70 wt.% and not greater than 95 wt.%, and the content of the ionomer resin is not less than 5 wt.% and not greater than 30 wt.%. In addition, preferably the content of the ethylene-unsaturated carboxylic acid copolymer is not less than 75 wt.% and not greater than 85 wt.%, and the content of the ionomer resin is not less than 15 wt.% and not greater than 25 wt.%; and more preferably the content of the ethylene-unsaturated carboxylic acid copolymer is not less than 78 wt.% and not greater than 82 wt.%, and the content of the ionomer resin is not less than 18 wt.% and not greater than 22 wt.%. With the content of the ethylene-unsaturated carboxylic acid copolymer and the content of the ionomer resin being in the preferred ranges described above, a heat-shrinkable film, with lighter weight and higher strength than those of known heat-shrinkable films, and excellent in self-welding ability can be obtained.

In addition, the thickness of the inner surface layer is typically not less than 5% and not greater than 35%, preferably not less than 10% and not greater than 30%, and more preferably not less than 15% and not greater than 25% of the total thickness of the heat-shrinkable film.

By setting the thickness of the inner surface layer to the preferred ranges described above, a heat-shrinkable film with light weight and sufficient strength can be obtained.

Note that a method for mixing the ethylene-unsaturated carboxylic acid copolymer and the ionomer resin is not particularly limited as long as it is a common technique. Examples thereof include techniques such as melt mixing, machine mixing, and simple mixing.

### Ethylene-unsaturated carboxylic acid copolymer

The ethylene-unsaturated carboxylic acid copolymer is a polymer of ethylene and an unsaturated carboxylic acid.

Examples of the ethylene-unsaturated carboxylic acid copolymer may include ethylene-acrylic acid copolymer (EAA), ethylene-methacrylic acid copolymer (EMAA), and ethylene-maleic acid copolymer (EMAH), with EAA and EMAA being preferred, and EMAA more preferred.

Note that the ethylene-unsaturated carboxylic acid copolymer is not particularly limited, and those selected as appropriate from those available in the market can be used, but those having density, melt mass flow rate (MFR), and melting point in the following ranges are preferred.

The density of the ethylene-unsaturated carboxylic acid copolymer is, from the viewpoint of transparency, preferably not less than 0.90 g/cm³ and not greater than 0.98 g/cm³, more preferably not less than 0.91 g/cm³ and not greater than 0.97 g/cm³, and even more preferably not less than 0.92 g/cm³ and not greater than 0.96 g/cm³.

The MFR of the ethylene-unsaturated carboxylic acid copolymer is preferably not less than 2.5 g/10 min and not greater than 25 g/10 min, more preferably not less than 2.5 g/10 min and not greater than 20 g/10 min, and even more preferably not less than 2.5 g/10 min and not greater than 15 g/10 min. With the preferred ranges described above, the seal strength of the heat-shrinkable film at low temperature becomes high.

The melting point of the ethylene-unsaturated carboxylic acid copolymer is preferably not lower than 80°C and not higher than 110°C, more preferably not lower than 85°C and not higher than 106°C, and even more preferably not lower than 90°C and not higher than 102°C. With the preferred ranges described above, a heat-shrinkable film excellent in self-welding ability can be obtained.

### lonomer resin

The ionomer resin is a resin using, as a base polymer, an ethylene-unsaturated carboxylic acid copolymer or an ethylene-unsaturated carboxylic acid-unsaturated carboxylic ester terpolymer, with carboxyl groups in the copolymer or terpolymer being neutralized with a cation.

The unsaturated carboxylic acid in the ethylene-unsaturated carboxylic acid copolymer or the ethylene-unsaturated carboxylic acid-unsaturated carboxylic ester terpolymer is, for example, preferably methacrylic acid, acrylic acid, maleic acid, and fumaric acid, more preferably methacrylic acid, acrylic acid, and maleic acid, and more preferably methacrylic acid and acrylic acid.

The unsaturated carboxylic ester in the ethylene-unsaturated carboxylic acid-unsaturated carboxylic ester terpolymer is preferably an alkyl ester of (meth)acrylic acid having from 1 to 6 carbons.

In the present embodiment, as the ionomer resin, a resin of an ethylene-unsaturated carboxylic acid-unsaturated carboxylic ester terpolymer with carboxyl groups therein being neutralized with a cation is preferably used. The terpolymer is preferably an ethylene-(meth)acrylic acid-alkyl (meth)acrylic ester such as ethylene-methacrylic acid-isobutyl acrylate.

The cation used for the neutralization may include metal ions such as Na⁺, K⁺, Li⁺, Cs⁺, Ag⁺, Hg⁺, Cu⁺, Mg²⁺, Zn₂⁺ , Be²⁺, Ca²⁺, Ba²⁺, Cu²⁺ , Cd²⁺ , Hg²⁺, Sn₂⁺, Pb²⁺, Fe²⁺, Co²⁺, Ni²⁺, Al³⁺, Sc³⁺, Fe³⁺, and Y³⁺; and organic amines. Among them, typically, Na⁺, K⁺, Ca²⁺, Zn²⁺, and the like are preferably used.

The ionomer resin is not particularly limited as long as it is a common one, and those selected as appropriate from those available in the market can be used, but those having density, melt mass flow rate (MFR), and melting point in the following ranges are preferred.

The density of the ionomer resin is, from the viewpoint of extrudability, preferably not less than 0.90 g/cm³ and not greater than 1.00 g/cm³, more preferably not less than 0.92 g/cm³ and not greater than 0.98 g/cm³, and even more preferably not less than 0.94 g/cm³ and not greater than 0.96 g/cm³.

The MFR of the ionomer resin is, from the viewpoint of extrudability, preferably not less than 0.5 g/10 min and not greater than 2.5 g/10 min, more preferably not less than 0.6 g/10 min and not greater than 2.0 g/10 min, and even more preferably not less than 0.7 g/10 min and not greater than 1.5 g/10 min.

The melting point of the ionomer resin is preferably not lower than 70°C and not higher than 98°C, more preferably not lower than 72°C and not higher than 96°C, and even more preferably not lower than 74°C and not higher than 94°C. With the preferred ranges described above, a heat-shrinkable film excellent in self-welding ability can be obtained.

### Intermediate layer

The intermediate layer is a layer adjacent to the inner surface layer, the inner surface layer to be in contact with a filling material, and present between the inner surface layer and the barrier layer. The intermediate layer may be a single-layer structure or a multi-layer structure.

A resin composing the intermediate layer is not particularly limited as long as it is a common resin, but it is preferably a flexible resin capable of ensuring shrinkage ratio and having little effect on the heat-shrinkable film.

The thickness of the intermediate layer is preferably not greater than 1.4 times that of the inner surface layer, more preferably not greater than 1.2 times, and even more preferably not greater than 1.0 times. For stretchability of the heat-shrinkable film including the inner surface layer, the intermediate layer, and the barrier layer, a balance between the intermediate layer and the inner surface layer is an important factor. Since the intermediate layer generally includes much flexible resin, when the ratio of the intermediate layer is increased, stretching is accelerated and inflation bubbles are unstabilized. Accordingly, with the thickness of the intermediate layer being not greater than 1.4 times that of the inner surface layer, the film does not excessively stretch, and thus the manufacturing does not become difficult. That is, an effect of stabilizing inflation bubbles during stretching is provided.

Examples of the intermediate layer include linear low density polyethylenes (LLDPE) such as ethylene-α-olefin copolymers (SSC-LLDPE); linear very low density polyethylenes (SSC-VLDPE); very low density polyethylenes (VLDPE); ethylene-vinyl acetate copolymers (EVA); EAA; ethylene-acrylic ester copolymers; EMAA; ethylene-methacrylic ester copolymers, and ethylene-methacrylic acid-acrylic ester copolymers. These crosslinkable resins composing the intermediate layer can be used alone or in a mixture of two or more.

By including the intermediate layer including such crosslinkable resins, the heat-shrinkable film according to the present embodiment becomes excellent in melt hole resistance, heat resistance, and mechanical strength.

### Barrier layer

The barrier layer has gas barrier properties in the heat-shrinkable film.

Example of resins composing the barrier layer may include vinylidene chloride-based resins (PVDC), ethylene-vinyl alcohol copolymers (EVOH), and polyamide-based resins. Among them, particularly PVDC is preferred from the viewpoint of imparting high shrinkability.

These resins composing the barrier layer can be used alone or in a mixture of two or more.

### Other layers

The heat-shrinkable film according to the present embodiment may further include a layer other than the inner surface layer, the intermediate layer, and the barrier layer. Other layers include an outer layer adjacent to an outer side of the barrier layer, an outermost layer adjacent to an outer side of the outer layer, and an adhesive layer adhering each layer together. Note that the adhesive layer may be provided between layers as appropriate.

Resins composing other layers are not particularly limited as long as they are common resins, and examples thereof include polyolefins such as VLDPE, low density polyethylenes, high density polyethylenes, LLDPE and polyethylenes; polyamides such as nylon 6, nylon 66, nylon 46, nylon 6-66, nylon MXD, and nylon 6I6T (wherein I represents isophthalic acid, and T represents terephthalic acid); polyesters such as polyethylene terephthalates, and a copolymerized polyethylene terephthalate, which is a copolymer of isophthalic acid and ethylene terephthalate; ethylene-methyl acrylate copolymers; polyvinylidene chlorides (PVDC); EVOH; EVA; and ionomers.

In addition, the adhesive layer that may be provided as appropriate can be used between the barrier layer including PVDC, and the like and other resin layers, between polyolefin-based resin layers and the like, and it may be further provided between the intermediate layer and the barrier layer. Examples of resins forming the adhesive layer include ethylene-acrylic ester copolymers.

Note that the layers composing the heat-shrinkable film may include a component other than resins. Examples of the component other than resins include various additives, such as lubricants, antifog agents, antioxidants, UV absorbers, photostabilizers, antistatic agents, antiblocking agents, and dyes, pigments.

A layer composition of the heat-shrinkable film according to the present embodiment is not particularly limited as long as the inner surface layer includes the ethylene-unsaturated carboxylic acid copolymer and the ionomer resin in the ratio described above, but examples of the heat-shrinkable film include a heat-shrinkable film with a layer composition including VLDPE/EVA/an ethylene-methylacrylate copolymer (EMA)/PVDC/a blend material respectively in each layer; a heat-shrinkable film with a layer composition including VLDPE/EVA/EMA/PVDC/EMA/EVA/a blend material respectively in each layer; a heat-shrinkable film with a layer composition including EVA/PVDC/a blend respectively in each layer; a heat-shrinkable film with a layer composition including nylon/EVA/PVDC/a blend material respectively in each layer; a heat-shrinkable film with a layer composition including a copolymerized polyethylene terephthalate/an adhesive layer/nylon/EVOH/an adhesive layer/a blend material respectively in each layer; and the like; wherein layers are described in the order from a layer composing the outer surface to a layer (inner surface layer) coming into contact with a filling material such as food.

### Filling material

The heat-shrinkable film of the present embodiment is to package a filling material. In the present embodiment, the filling material is not particularly limited, but examples thereof include meat such as a livestock meat, and more specifically meat of cattle, swine, sheep, and a bird (for example, a chicken, a turkey, and a wild duck).

The shape of each meat does not matter, but examples thereof include, in the case of beef, pork, or mutton, a cut (a lump of meat not less than 5 kg and not greater than 15 kg cut out of a dressed carcass), a block (a lump of meat less than 5 kg cut out of a dressed carcass), a slice, and mincemeat, and in the case of bird meat, a whole (those with the head, feathers, and organs being removed), a block, and a slice, mincemeat.

### Method for manufacturing heat-shrinkable film

The heat-shrinkable film according to the present embodiment includes a method for manufacturing the heat-shrinkable film according to claim 5.

In the step of melt extruding, a temperature during extruding is not particularly limited as long as resins included in each of the layers melt at the temperature, and any temperature can be utilized, but, for example, in the case of the blend material of the ethylene-unsaturated carboxylic acid copolymer and the ionomer resin for forming the inner surface layer, it is preferably not lower than 150°C and not higher than 195°C, and more preferably not lower than 160°C and not higher than 185°C. In the case of resins for forming the intermediate layer, it is preferably not lower than 160°C and not higher than 195°C, and more preferably not lower than 170°C and not higher than 185°C. In the case of resins for forming the barrier layer, it is preferably not lower than 130°C and not higher than 175°C, and more preferably not lower than 140°C and not higher than 165°C.

In the step of co-extruding, a temperature during co-extruding with an annular die is preferably not lower than 155°C and not higher than 190°C, and more preferably not lower than 165°C and not higher than 180°C.

In the step of cooling, an annular body obtained by co-extruding is cooled in a water bath. A cooling temperature may be a temperature lower than melting points of resins composing each layer, and, for example, it is preferably not lower than 3°C and not higher than 15°C, and more preferably not lower than 5°C and not higher than 11°C.

In addition, the annular body after cooling in a water bath may be irradiated with radiation in an electron beam irradiator. By crosslinking resins included in each layer together in such a configuration, stretchability, heat resistance, mechanical strength, and the like can be improved compared with those not irradiated.

As the radiation, well-known radiation such as α-ray, β-ray, electron beam, γ-ray, and x-ray can be used, but from the viewpoint of the crosslinking effect before and after the irradiation, electron beam and γ-ray are preferred, and among them electron beam is more preferred in view of high workability and high productive capacity in manufacturing the heat-shrinkable film. Irradiation conditions for the radiation may be set as appropriate depending on the targeted application, and as an example, for electron beam, acceleration voltage is preferably in a range of not less than 150 and not greater than 500 kilo electron volt (hereinafter described as "keV"), and irradiation dose is preferably in a range of not less than 10 and not greater than 200 kilogray (hereinafter described as "kGy"); and for γ-ray, dose rate is preferably in a range of not less than 0.05 and not greater than 3 kGy/hour.

In addition, in the step of heating, the annular body after being cooled or irradiated with radiation is heated and then formed into a tubular body, and stretched.

Heating is, for example, performed by passing the body through hot water to stretch it. Temperature for the reheating is, from the viewpoint of stretchability, preferably not lower than 85°C and not higher than 89°C, and more preferably not lower than 85°C and not higher than 87°C.

The tubular body stretched by heating is stopped at a predetermined size and cooled to stabilize inflation bubbles. A cooling temperature is preferably not lower than 6°C and not higher than 14°C, and more preferably not lower than 8°C and not higher than 12°C.

In the step of stretching, a method used for stretching is the inflation method wherein the tubular body is drawn out in a vertical direction while a fluid is being loaded into the inside of the tubular body. Manufacturing by uniaxial stretching or biaxial stretching is preferred.

By performing uniaxial or biaxial stretching appropriately, the area shrinkage ratio of the heat-shrinkable film can be controlled in the preferred ranges described above. In addition, since molecules are generally oriented by biaxial stretching, from the viewpoint of transparency, barrier properties, and strength, biaxial stretching is more preferred.

Stretching ratio is not particularly limited, but stretch ratio in a machine direction (MD) is preferably not less than 2.5 times and not greater than 4.0 times, and more preferably not less than 2.7 times and not greater than 3.8 times. In addition, stretch ratio in a traverse direction (TD) is preferably not less than 2.6 times and not greater than 3.8 times, and more preferably not less than 2.8 times and not greater than 3.6 times.

Note that generally a stretched heat-shrinkable film shrinks when the amount of heat exceeding the temperature applied during stretching is applied. Shrinkage ratio of the heat-shrinkable film can be adjusted as appropriate by not only materials composing the heat-shrinkable film but also manufacturing conditions such as stretch ratio.

### Recapitulation

A heat-shrinkable film according to the present invention is a heat-shrinkable film according to claim 1.

In addition, in the heat-shrinkable film according to the present invention, the ethylene-unsaturated carboxylic acid copolymer is preferably an ethylene-methacrylic acid copolymer.

In addition, in the heat-shrinkable film according to the present invention, the thickness of the inner surface layer is preferably not greater than 20% of the total thickness of the film.

In addition, in the heat-shrinkable film according to the present invention, the melt mass flow rate of the ethylene-methacrylic acid copolymer is not less than 2.5 g/10 min and not greater than 25 g/10 min.

In addition, the heat-shrinkable film according to the present invention preferably includes at least three layers: the inner surface layer, a barrier layer, and an intermediate layer between the inner surface layer and the barrier layer; wherein the thickness of the intermediate layer is not greater than 1.4 times the thickness of the inner surface layer.

In addition, a method for manufacturing the heat-shrinkable film according to the present invention is a method for manufacturing a heat-shrinkable film according to claim 5.

Examples will be shown below to describe embodiments of the present invention in further detail. The present invention is, of course, not limited to the examples below, and it is obvious that various aspects are possible with regard to the details thereof. In addition, the present invention is not limited to the embodiments described above, and various modifications are possible within the scope indicated in the claims. Embodiments obtained by appropriately combining the technical means disclosed by the embodiments are also included in the technical scope of the present invention.

### Examples

The amounts of ionomer resins (IO) and EMAA included in the inner surface layer in Examples and Comparative Examples of the present invention, and various evaluation results are summarized in Table 1 below. In addition, resin materials included in each layer of heat-shrinkable films of Examples and Comparative Examples are shown below.

### Resin materials

### (1) Ionomer resin (IO)

- SURLYN 1707 available from Du Pont-Mitsui Polychemicals Co., Ltd. (hereinafter described as "IO-1". Cation to neutralize carboxylic acid groups in the copolymer of ethylene and unsaturated carboxylic acid: Na, density: 0.95 g/cm³, MFR: 0.9 g/10 min, melting point: 92°C)
- SURLYN 1706 available from Du Pont-Mitsui Polychemicals Co., Ltd. (hereinafter described as "IO-2". Cation to neutralize carboxylic acid groups in the copolymer of ethylene and unsaturated carboxylic acid: Zn, density: 0.95 g/cm³, MFR: 0.7 g/10 min, melting point: 90°C)

### (2) Ethylene methacrylic acid resin (EMAA)

- NUCREL 0903 HC available from Du Pont-Mitsui Polychemicals Co., Ltd. (hereinafter described as "EMAA-1". Density: 0.93 g/cm³, MFR: 2.5 g/10 min, melting point: 102°C)
- NUCREL 925 available from Du Pont-Mitsui Polychemicals Co., Ltd. (hereinafter described as "EMAA-2". Density: 0.94 g/cm³, MFR: 25 g/10 min, melting point: 93°C) (3) VLDPE
- MORETEC V0398CN available from Prime Polymer Co., Ltd. (density: 0.907 g/cm³, MFR: 3.3 g/10 min, melting point: 122°C)

### (4) PVDC

- KUREHALON available from Kureha Corporation (density: 1.71 g/cm³, melting point: 140°C)

### (5) EMA

- An adhesive layer resin obtained by mixing Elvaloy 1218AC available from Du Pont-Mitsui Polychemicals Co., Ltd. (density: 0.94 g/cm³, MFR: 2.0 g/10 min, melting point: 94°C) and Elvaloy 1209AC (density: 0.927 g/cm³, MFR: 2.0 g/10 min, melting point: 101°C) in a ratio of 33 wt.%:67 wt.%, respectively

### (6) EVA

- Polene N8038F available from TPI Polene Co., Ltd. (Hereinafter described as "EVA-1")
- Polene N8036 available from TPI Polene Co., Ltd. (Hereinafter described as "EVA-2")

### Example 1

First, 20 wt.% of IO-2 and 80 wt.% of EMAA-1 were melt mixed. The composition of a laminate was configured to be a layer composition including the following resin(s) in each layer from outside to inside in this order with a thickness shown in parentheses (unit: µm): VLDPE (2.0)/EVA-1 (24)/EMA (1.5)/PVDC (7)/EMA (1.5)/EVA-2 (9.5)/20 wt.% of IO-2 + 80 wt.% of EMAA-1 (9.5). To configure a heat-shrinkable film in the layer composition described above, co-extruding process was performed by melt extruding each resin respectively with a plurality of extruders, and introducing the melted resin into an annular die to melt bond the melted resins so as to configure the layer composition described above. The melt excluded annular body of a temperature of 180°C flowed out of the die outlet was cooled in a water bath to 10°C to form a flat annular body with a flat width of about 135 mm. Next, the resulting flat annular body was irradiated from the outside of the flat annular body in an electron beam irradiator at an acceleration voltage of 275 keV to give an irradiation dose of 100 kGy, and to crosslink VLDPE contained in the outermost layer and EVA-1 contained in the adjacent layer inside of the outermost layer. After this flat annular body was heated while passing it through hot water of about 86°C, the flat annular body was formed into a tubular body, and the tubular body was simultaneously biaxially stretched by inflation method, while cooling the tubular body using airing of 10°C, with a stretch ratio of 3.1 times in a machine direction (MD) and 3.2 times in a traverse direction (TD) to obtain an annular biaxially stretched film with a flat width of about 428 mm.

### Example 2

Except that the composition of resins in the inner surface layer was changed as indicated in Table 1, a biaxially stretched film (heat-shrinkable film) according to Example 2 was obtained in the same manner as in Example 1.

### Comparative Examples 1 to 5

Except that the composition of resins in the inner surface layer was changed as indicated in Table 1, biaxially stretched films (heat-shrinkable films) according to Comparative Examples 1 to 5 were obtained in the same manner as in Example 1.

### Evaluation of properties of heat-shrinkable film

Hereinafter, evaluation methods and evaluation results of properties of the heat-shrinkable films prepared in Examples 1, 2, and Comparative Examples 1 to 5 are described.

### Evaluation of area shrinkage ratio

The area shrinkage ratio of the heat-shrinkable film was measured by the following method.

A heat-shrinkable film cut out into 100 mm (machine direction: MD) x 100 mm (traverse direction: TD) was immersed in hot water of 75°C for 10 seconds, and then taken out to cool in water of ordinary temperature.

For the heat-shrinkable film after immersion and cooling, length in MD and length in TD were measured with a ruler, and from length in MD and length in TD before immersion, the shrinkage ratio in MD and shrinkage ratio in TD were respectively determined to calculate area shrinkage ratio based thereon.

The area shrinkage ratio was determined by [1 - (length in MD after shrinkage x length in TD after shrinkage)/(length in MD before shrinkage x length in TD before shrinkage)] x 100.

Evaluation of the area shrinkage ratio was made according to the following criteria.
Good: The area shrinkage ratio is not less than 55% and not greater than 90%
Poor: The area shrinkage ratio is less than 55% or greater than 90%
Note that a value in parentheses in Table 1 is the area shrinkage ratio of each film.

### Evaluation of self-welding ability

### Preparation of sample

A heat-shrinkable film processed into a bag shape was filled with a filling material. During this, care is taken to adjust the length of the edge part (distance from the sealed part (seal line) to the edge of the filling material after vacuum packaging) to a length sufficient to measure adhesion strength between the inner surfaces each other in the edge part, for example, not shorter than 200 mm, so as not to generate creases in the edge part. A package packaging the filling material was immersed in hot water of 80°C for 10 seconds, and then, taken out and immediately cooled in water of ordinary temperature.

### Measurement of adhesion strength of inner surface

After the resulting sample was allowed to stand in a room at a temperature of 23°C, a relative humidity of 50% for one day, adhesion strength between the inner surface layers in the edge part of the sample was measured in the following conditions. The average strength of five measurements was reported as a measurement value.
- Measuring instrument: Tensile tester Tensilon RTM-100 available from Orientec Co., Ltd.
- Distance between chucks: 20 mm
- Chuck speed: 300 mm/min
- Sample width: 15 mm
- Ambient temperature: 23°C
- Ambient relative humidity: 50%

From the results of adhesion strength between the inner surface layers, evaluation of self-welding ability was made according to the following criteria.
Good: Adhesion strength is not less than 0.5 N/15 mm
Poor: Adhesion strength is less than 0.5 N/15 mm

### Evaluation of seal strength at low temperature

One side of the edge parts of the cylindrical sample was heat sealed with a seal bar heated at 240°C to prepare a bag shape sample for measuring seal strength. After the sample was allowed to stand in a constant temperature room of 23°C for one day, it was moved to a constant temperature room of 5°C and allowed to stand for not less than 3 hours. Thereafter, the sample was fixed, and from a non-heat-sealed open side of the edge parts of the sample a ball of 5.5 kg was fallen to the seal part. Height to fall the ball was 70 cm above the seal part of the sample, and the number of the ball falling test was up to five times for one sample. This procedure was conducted on 10 sheets of the sample, and seal strength was indicated by the number of samples with a ruptured seal part. Evaluation of the seal strength was made based on the following criteria.
Excellent: No bags were ruptured, having high seal strength.
Good: Not less than one and not greater than six bags were ruptured, having practically sufficient seal strength.
Poor: Not less than seven bags were ruptured, having insufficient seal strength.

**Table 1**

| | | Example 1 | Example 2 | Comparative Example 1 | Comparative Example 2 | Comparative Example 3 | Comparative Example 4 | Comparative Example 5 |
|---|---|---|---|---|---|---|---|---|
| Inner surface layer | IO | IO-2 20 wt.% | IO-2 20 wt.% | - | IO-1 100 wt.% | IO-1 40 wt.% | IO-1 60 wt.% | IO-2 60 wt.% |
| | EMAA | EMAA-1 80 wt.% | EMAA-2 80 wt.% | EMAA-1 100 wt.% | - | EMAA-1 60 wt. % | EMAA-1 40 wt.% | EMAA-2 40 wt.% |
| Self-welding ability | | Good | Good | Poor | Good | Poor | Poor | Good |
| Seal strength | | Excellent | Good | Good | Poor | Poor | Poor | Poor |
| Area shrinkage ratio (75°C) | | Good (60%) | Good (60%) | Good (56%) | Poor (50%) | Good (56%) | Good (58%) | Good (60%) |

### Industrial applicability

The present invention can be used as a film for a vacuum packaging material of meat and the like.

## Claims

1. A heat-shrinkable film for food packaging comprising at least three layers: an inner surface layer to be in contact with a filling material; a barrier layer; and an intermediate layer between the inner surface layer and the barrier layer,
wherein the inner surface layer and the intermediate layer are adjacent to each other, a thickness of the intermediate layer is not greater than 1.4 times a thickness of the inner surface layer,
the inner surface layer comprises an ethylene-unsaturated carboxylic acid copolymer selected from an ethylene-acrylic acid copolymer or an ethylene-methacrylic acid copolymer, and an ionomer resin, **characterized in that**
with a total of a content of the ethylene-unsaturated carboxylic acid copolymer and a content of the ionomer resin being 100 wt.%, a content of the ethylene-unsaturated carboxylic acid copolymer is not less than 70 wt.% and not greater than 95 wt.%, and a content of the ionomer resin is not less than 5 wt.% and not greater than 30 wt.%, and **in that** the heat-shrinkable film has an area shrinkage ratio of not less than 55% and not greater than 90% when immersed in hot water of 75°C for 10 seconds.

2. The heat-shrinkable film for food packaging according to claim 1, wherein the ethylene-unsaturated carboxylic acid copolymer is an ethylene-methacrylic acid copolymer.

3. The heat-shrinkable film for food packaging according to claim 1 or 2, wherein a thickness of the inner surface layer is not greater than 20% of a total thickness of the heat-shrinkable film.

4. The heat-shrinkable film for food packaging according to claim 2, wherein a melt mass flow rate of the ethylene-methacrylic acid copolymer is not less than 2.5 g/10 min and not greater than 25 g/10 min.

5. A method for manufacturing a heat-shrinkable film for food packaging comprising at least three layers: an inner surface layer to be in contact with a filling material; a barrier layer; and an intermediate layer between the inner surface layer and the barrier layer,
the inner surface layer and the intermediate layer being adjacent to each other,
a thickness of the intermediate layer being not greater than 1.4 times a thickness of the inner surface layer, and
the inner surface layer comprising an ethylene-unsaturated carboxylic acid copolymer selected from an ethylene-acrylic acid copolymer or an ethylene-methacrylic acid copolymer, and an ionomer resin,
the method comprising the steps of:
(a) melt extruding resins with at least three or more extruders depending on the number of types of resins for forming each of the layers of the heat-shrinkable film;
(b) introducing the melt extruded resins into a die and co-extruding the melt extruded resins;
(c) forming the co-extruded material into a tubular body comprising the barrier layer, the intermediate layer, and the inner surface layer, and water cooling the tubular body to a temperature not higher than melting points of resins comprised in each of the layers in the tubular body;
(d) heating the tubular body after cooling, with hot water not lower than 85°C and not higher than 89°C; and
(e) stretching the tubular body while drawing out the tubular body after heating in a vertical direction and loading a fluid into the inside of the tubular body, with a stretch ratio in a machine direction (MD) of not less than 2.5 times and not greater than 4.0 times, and a stretch ratio in a traverse direction (TD) of not less than 2.6 times and not greater than 3.8 times;
wherein with a total of a content of the ethylene-unsaturated carboxylic acid copolymer and a content of the ionomer resin being 100 wt.%, a content of the ethylene-unsaturated carboxylic acid copolymer is not less than 70 wt.% and not greater than 95 wt.%; and a content of the ionomer resin is not less than 5 wt.% and not greater than 30 wt.%, and wherein the heat-shrinkable film has an area shrinkage ratio of not less than 55% and not greater than 90% when immersed in hot water of 75°C for 10 seconds.

## Patentansprüche

1. Wärmeschrumpfbare Folie zum Verpacken von Lebensmittel, umfassend mindestens drei Schichten: eine innere Oberflächenschicht, die in Kontakt mit einem Füllmaterial kommen soll; eine Barriereschicht; und eine Zwischenschicht zwischen der inneren Oberflächenschicht und der Barriereschicht,
wobei die innere Oberflächenschicht und die Zwischenschicht aneinander angrenzen, eine Dicke der Zwischenschicht höchstens das 1,4-Fache einer Dicke der inneren Oberflächenschicht beträgt,
die innere Oberflächenschicht ein ethylenisch ungesättigtes Carbonsäure-Copolymer, das ausgewählt ist aus einem Ethylen-Acrylsäure-Copolymer oder einem Ethylen-Methacrylsäure-Copolymer, und ein lonomerharz umfasst, **dadurch gekennzeichnet, dass**
wenn ein Gehalt an ethylenisch ungesättigtem Carbonsäure-Copolymer und ein Gehalt an lonomerharz zusammengenommen 100 Gew.-% betragen, ein Gehalt an ethylenisch ungesättigtem Carbonsäure-Copolymer mindestens 70 Gew.-% und höchstens 95 Gew.-% beträgt und ein Gehalt an lonomerharz mindestens 5 Gew.-% und höchstens 30 Gew.-% beträgt und dass die wärmeschrumpfbare Folie beim Eintauchen in heißes Wasser von 75 °C für 10 Sekunden ein Flächenschrumpfungsverhältnis von mindestens 55 % und höchstens 90 % aufweist.

2. Wärmeschrumpfbare Folie zum Verpacken von Lebensmitteln nach Anspruch 1, wobei das ethylenisch ungesättigte Carbonsäure-Copolymer ein Ethylen-Methacrylsäure-Copolymer ist.

3. Wärmeschrumpfbare Folie zum Verpacken von Lebensmitteln nach Anspruch 1 oder 2, wobei eine Dicke der inneren Oberflächenschicht nicht mehr als 20 % einer Gesamtdicke der wärmeschrumpfbaren Folie beträgt.

4. Wärmeschrumpfbare Folie zum Verpacken von Lebensmitteln nach Anspruch 2, wobei eine Schmelzmassenflussrate des Ethylen-Methacrylsäure-Copolymers mindestens 2,5 g / 10 min und höchstens 25 g / 10 min beträgt.

5. Verfahren zum Herstellen einer wärmeschrumpfbaren Folie zum Verpacken von Lebensmitteln, umfassend mindestens drei Schichten: eine innere Oberflächenschicht, die in Kontakt mit einem Füllmaterial kommen soll; eine Barriereschicht; und eine Zwischenschicht zwischen der inneren Oberflächenschicht und der Barriereschicht,
wobei die innere Oberflächenschicht und die Zwischenschicht aneinander angrenzen, eine Dicke der Zwischenschicht mindestens das 1,4-Fache einer Dicke der inneren Oberflächenschicht beträgt und
die innere Oberflächenschicht ein ethylenisch ungesättigtes Carbonsäure-Copolymer, das ausgewählt ist aus einem Ethylen-Acrylsäure-Copolymer oder einem Ethylen-Methacrylsäure-Copolymer, und ein lonomerharz umfasst,
wobei das Verfahren die Schritte umfasst:
(a) Schmelzextrudieren von Harzen mit mindestens drei oder mehr Extrudern in Abhängigkeit von der Anzahl der Arten von Harzen zum Bilden jeder der Schichten der wärmeschrumpfbaren Folie;
(b) Einbringen der schmelzextrudierten Harze in eine Matrize und Koextrudieren der schmelzextrudierten Harze;
(c) Ausbilden des koextrudierten Materials zu einem röhrenförmigen Körper, der die Barriereschicht, die Zwischenschicht und die innere Oberflächenschicht umfasst, und Wasserkühlen des röhrenförmigen Körpers auf eine Temperatur, die nicht höher ist als die Schmelzpunkte von Harzen, die in jeder der Schichten in dem röhrenförmigen Körper enthalten sind;
(d) Erwärmen des röhrenförmigen Körpers nach dem Abkühlen mit heißem Wasser von mindestens 85 °C und höchstens 89 °C; und
(e) Verstrecken des röhrenförmigen Körpers während des Ziehens des röhrenförmigen Körpers nach dem Erwärmen in einer vertikalen Richtung und dem Hineingeben eines Fluids in das Innere des röhrenförmigen Körpers mit einem Streckverhältnis in einer Maschinenrichtung (MR) von mindestens dem 2,5-Fachen und höchstens dem 4,0-Fachen und einem Streckverhältnis in Querrichtung (QR) von mindestens dem 2,6-Fachen und höchstens dem 3,8-Fachen;
wenn ein Gehalt an ethylenisch ungesättigtem Carbonsäure-Copolymer und ein Gehalt an lonomerharz zusammengenommen 100 Gew.-% betragen, ein Gehalt an ethylenisch ungesättigtem Carbonsäure-Copolymer mindestens 70 Gew.-% und höchstens 95 Gew.-% beträgt; und ein Gehalt an lonomerharz mindestens 5 Gew.-% und höchstens 30 Gew.-% beträgt und wobei die wärmeschrumpfbare Folie beim Eintauchen in heißes Wasser von 75 °C für 10 Sekunden ein Flächenschrumpfungsverhältnis von mindestens 55 % und höchstens 90 % aufweist.

## Revendications

1. Film thermorétractable pour emballage alimentaire comprenant au moins trois couches : une couche superficielle interne destinée à être en contact avec un matériau de remplissage ; une couche barrière ; et une couche intermédiaire entre la couche superficielle interne et la couche barrière,
dans lequel la couche superficielle interne et la couche intermédiaire sont l'une à côté de l'autre, une épaisseur de la couche intermédiaire n'est pas supérieure à 1,4 fois une épaisseur de la couche superficielle interne,
la couche superficielle interne comprend un copolymère d'éthylène-acide carboxylique insaturé choisi parmi un copolymère d'éthylène-acide acrylique ou un copolymère d'éthylène-acide méthacrylique, et une résine ionomère, **caractérisé en ce que**
avec un total d'une teneur du copolymère d'éthylène-acide carboxylique insaturé et d'une teneur de la résine ionomère valant 100 % en poids, une teneur du copolymère d'éthylène-acide carboxylique insaturé n'est pas inférieure à 70 % en poids et pas supérieure à 95 % en poids, et une teneur de la résine ionomère n'est pas inférieure à 5 % en poids et pas supérieure à 30 % en poids, et **en ce que** le film thermorétractable a un taux de retrait surfacique qui n'est pas inférieur à 55 % et pas supérieur à 90 % lors d'une immersion dans de l'eau chaude à 75 °C pendant 10 secondes.

2. Film thermorétractable pour emballage alimentaire selon la revendication 1, dans lequel le copolymère d'éthylène-acide carboxylique insaturé est un copolymère d'éthylène-acide méthacrylique.

3. Film thermorétractable pour emballage alimentaire selon la revendication 1 ou 2, dans lequel une épaisseur de la couche superficielle interne n'est pas supérieure à 20 % d'une épaisseur totale du film thermorétractable.

4. Film thermorétractable pour emballage alimentaire selon la revendication 2, dans lequel un débit massique en fusion du copolymère d'éthylène-acide méthacrylique n'est pas inférieur à 2,5 g/10 min et pas supérieur à 25 g/10 min.

5. Procédé de fabrication d'un film thermorétractable pour emballage alimentaire comprenant au moins trois couches : une couche superficielle interne destinée à être en contact avec un matériau de remplissage ; une couche barrière ; et une couche intermédiaire entre la couche superficielle interne et la couche barrière,
la couche superficielle interne et la couche intermédiaire étant l'une à côté de l'autre, une épaisseur de la couche intermédiaire n'étant pas supérieure à 1,4 fois une épaisseur de la couche superficielle interne, et
la couche superficielle interne comprenant un copolymère d'éthylène-acide carboxylique insaturé choisi parmi un copolymère d'éthylène-acide acrylique ou un copolymère d'éthylène-acide méthacrylique, et une résine ionomère,
le procédé comprenant les étapes consistant à :
(a) extruder en fusion des résines avec au moins trois extrudeuses ou plus en fonction du nombre de types de résines pour former chacune des couches du film thermorétractable ;
(b) introduire les résines extrudées en fusion dans une matrice et coextruder les résines extrudées en fusion ;
(c) former le matériau coextrudé en un corps tubulaire comprenant la couche barrière, la couche intermédiaire, et la couche superficielle interne, et refroidir à l'eau le corps tubulaire à une température qui n'est pas supérieure aux points de fusion des résines comprises dans chacune des couches dans le corps tubulaire ;
(d) chauffer le corps tubulaire après refroidissement, avec de l'eau chaude à pas moins de 85 °C et pas plus de 89 °C ; et
(e) étirer le corps tubulaire pendant l'extraction du corps tubulaire après chauffage dans une direction verticale et chargement d'un fluide à l'intérieur du corps tubulaire, avec un rapport d'étirement dans une direction machine (MD) qui n'est pas inférieur à 2,5 fois et pas supérieur à 4,0 fois, et un rapport d'étirement dans une direction transversale (TD) qui n'est pas inférieur à 2,6 fois et pas supérieur à 3,8 fois ;
dans lequel avec un total d'une teneur du copolymère d'éthylène-acide carboxylique insaturé et d'une teneur de la résine ionomère valant 100 % en poids, une teneur du copolymère d'éthylène-acide carboxylique insaturé n'est pas inférieure à 70 % en poids et pas supérieure à 95 % en poids ; et une teneur de la résine ionomère n'est pas inférieure à 5 % en poids et pas supérieure à 30 % en poids, et dans lequel le film thermorétractable a un taux de retrait surfacique qui n'est pas inférieur à 55 % et pas supérieur à 90 % lors d'une immersion dans de l'eau chaude à 75 °C pendant 10 secondes.
